(19) Europäisches Patentamt
European Patent Office
Office européen des brevets

(11) Publication number: **0 088 170**
**A1**

(12) **EUROPEAN PATENT APPLICATION**

(21) Application number: **82301096.2**

(22) Date of filing: **04.03.82**

(51) Int. Cl.³: **C 04 B 29/02**, C 04 B 13/00, E 21 D 20/02

(43) Date of publication of application: **14.09.83**
**Bulletin 83/37**

(84) Designated Contracting States: **DE FR GB**

(71) Applicant: **CELTITE INC., 150 Carley Court, Georgetown Kentucky 40324 (US)**

(72) Inventor: **Plaisted, Anthony Cecil, 2032 Blaimore Road, Lexington Kentucky 40502 (US)**
Inventor: **Patel, Natvaral K., 1989 Twin Ridge Drive, Lexington Kentucky, 40514 (US)**

(74) Representative: **Shaw, Laurence, George House George Road, Edgbaston Birmingham B15 1PG (GB)**

(54) **Self hardening composition and cartridge thereof.**

(57) A self setting composition comprises a basic component e.g. magnesia and an acidic component which, according to the invention, comprises a dihydrogen phosphate, a trivalent salt of phosphoric acid and a polyphosphate and/or an alkyl acid phosphate.

EP 0 088 170 A1

ACTORUM AG

# SELF HARDENING COMPOSITION AND CARTRIDGE THEREOF

The invention relates to an improved self hardening composition in bulk form or prepackaged in a cartridge and for use in anchoring.

It is known to react a basic oxide of a Group II or III metal compound e.g. magnesium oxide, with an acidic component comprising an acidic oxyphosphorus compound to form a hardenable grouting or anchoring composition - see British patent publication 2003851A. The invention relates to an improved acidic component the use of which offers certain advantages and to the improved composition formed therewith.

According to one aspect the invention provides for reacting with a basic oxide component to form a self hardening composition, an acidic component comprising an oxyphosphorus compound characterised in that the acidic component comprises in combination

(a) a dihydrogen phosphate

(b) a trivalent salt of phosphoric acid

(c) a polyphosphate and/or an alkyl acid phosphate.

The dihydrogen phosphate salt is preferably in

powdered form; preferred are sodium dihydrogen phosphate or mono ammonium phosphate in powdered form. Typically, the solids have a particle size distribution of 2 to 10% on 100 mesh, 15 to 35 percent on 200 mesh and 40 to 60 percent on 325 mesh (Tyler mesh sizes).

The proportion of sodium dihydrogen phosphate or mono ammonium phosphate in the total composition should be about 5 to 30%, preferably 10 to 25 percent by weight. The trivalent salt is preferably trisodium phosphate which is highly basic and may serve to break open polyphosphate chains to expose more oxyphosphorus sites for reaction with the basic oxide.

It has been discovered that, in correct proportions, trisodium phosphate in combination with polyphosphates or an alkyl acid phosphate, or both, exhibits a marked synergism not previously observed. The term polyphosphate includes any water soluble or dispersable polymerised phosphate compound with chain lengths containing two or more phosphorus units. Preferred polyphosphates having two and three chain units are characterised by the general formula $M_{n+2}P_nO_{3n+1}$ where M is a cation and <u>n</u> is an integer of 2 or 3; an example is sodium tripolyphosphate, $Na_5P_3O_{10}$. The term alkyl acid phosphate includes a

mixture of mono and dialkyl acid phosphates (phosphate esters) containing also condensed phosphates, characterised by the general formulae:

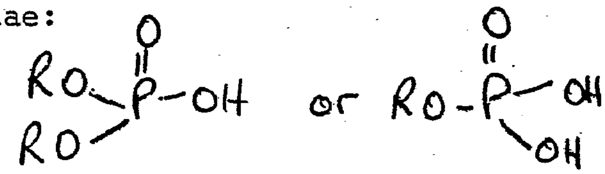

where R is a lower alkyl group such as methyl, ethyl, butyl or an alkanol or a fatty acid residue such as amyl or steryl; ethyl acid phosphate is an example. Alkyl acid phosphates are known and used in industry. Preferred alkyl phosphates are those prepared from the interaction of methyl, ethyl or propyl alcohols with phosphorus pentoxide. The resulting mixture contains about equimolar quantities of mono alkyl and dialkyl phosphates, together with small quantities of condensed phosphates. It is believed that these condensed phosphates contribute markedly to the overall early strength gain, by interacting with the magnesia, forming a crosslinked network of polyphosphates. A preferred commercially available source is a mixture of mono and dialkyl acid phosphates e.g. monoethyl phosphate and n-butyl phosphate having a viscosity between 100 and 2000 centipoise, preferably between 500 and 1500 centipoise.

A preferred blend is trisodium phosphate and an alkyl acid phosphate. This allows the minimum water requirement to produce a pumpable paste, and which is essential to obtain early strength gain in the initial stages of cure.

The inclusion of the combination of a trivalent salt of a phosphate with either a polyphosphate salt or an alkyl acid phosphate allows the maximum strength properties of the reaction to be realised. This is brought about by forming a cross linked network of polyphosphates resulting in superior wetting properties, compressive and shear strengths. It is theorised that the trivalent salt phosphate functions as a reaction promoter.

Apart from the alkyl acid phosphate, the phosphate salts are commercially available in granular form. It is found necessary therefore to incorporate these by intimate mixing with the monoammonium dihydrogen phosphate or sodium dihydrogen phosphate followed by a suitable grinding procedure for maximum effectiveness.

While the preferred phosphates are sodium or ammonium compounds, the corresponding lithium and potassium salts may be used.

The basic oxides useful in this invention are alkaline earth metal oxides capable of reacting with the phosphate components. Ground calcined refractory grade magnesia is preferred and preferably the magnesia has a moderate activity defined by a bulk density in the range

0.32 kg/cu.cm to about 3.36 kg/cu.cm, preferably 0.8 to 1.6 kg/cu.cm, and a surface area in the range 0.5 $m^2$/g. up to 8$m^2$/g. The preferred magnesia is further characterised by having a loss on ignition of less than 3.5 percent, and having minimum fluxing impurities of $SiO_2$, $Fe_2O_3$, $Na_2O$, and CaO. For instance, it is preferred that CaO be present in an amount less than 1 percent. The ground calcined magnesia should be 95 percent passing 200 mesh sieve. A magnesium oxide useful in the invention is available from the Martin Marietta Company under the trademark "Mag Chem 10" which is 97 percent MgO, 1 percent maximum CaO and 0.5 percent maximum of all other impurities. A preferred form of magnesia is ground calcined magnesia. However, the basic material may also be deadburned magnesite of natural or synthetic origin, deadburned dolomite or aluminium trihydrate.

It is advantageous to include in the basic component, a quantity of filler containing a latent source of oxides capable of reacting with the phosphate ion. Suitable materials include graded raw dried dolomite or alumina trihydrate, present in amounts from 1 to 10% of total weight, and preferably from 5 to 10% of the total weight of the composition.

Other fillers include a well-graded sand from 20 mesh through 200 mesh (Tyler sieve) and comprises from 5 to 50% and preferably 10 to 30% of the weight of the total composition; tricalcium phosphate and calcium hydrogen phosphate.

The principal reactions involved in the invention are given by the following equation:

$$3MgO+2NH_4H_2PO_4 \xrightarrow{H_2O} Mg_3\ (PO_4)_2+2NH_3 \uparrow +3H_2O$$

$$MgO + NaH_2PO_4 \xrightarrow{H_2O} NaMgPO_4 + 2H_2O$$

The resulting magnesium phosphate is a very hard cementitious mass and can give the required strength properties for anchor bolt applications in rock reinforcement. Some free water remains entrapped in the mass after reaction and since wet phosphates do not exhibit good physical properties, the amount of water used in the reaction plays an important role in dictating the strength properties of the product in the initial stages of cure.

It is, therefore, preferred that the water content be low, preferably between about 3% and about 20% of the composition, most preferably between 6% and 10%. The use of alkyl acid phosphates aids in this respect and it is also preferred to include a water reducing agent such as a

lignosulphonate, a naphthalene sulphonate or a sulphonated melamine formaldehyde. Such agents can make up from about 1% to about 3% of the composition.

When using the acid phosphate component of the invention the formed mixture has a relatively mild acid pH. The preferred method of manufacture is to first mix the two phosphate salts, namely, mono ammonium dihydrogen phosphate and trisodium phosphate, then add the polyphosphate or the alkyl acid phosphate, followed by the sand or other optional unreactive fillers, and finally add water, generally amounting to about 1 percent of the total weight of the composition. The resulting slurry has a pH of 4.8.

The invention further includes a self hardenable composition comprising

(i) an acidic component comprising

(a) a dihydrogen phosphate making up 5 to 30%, perferably 10 to 25% of the weight of the composition

(b) a trivalent salt of phosphoric acid

(c) a polyphosphate and/or an alkyl acid phosphate, ingredients (b) and (c) making up 2 to 15% of the weight of the composition; and

(ii) a basic component comprising

(d) a basic oxide making up 10 to 30% of the weight of the composition,

(e) a water reducing agent making up 1 to 3% of the weight of the composition, and optionally

(iii) fillers in one or both components making up the balance of the weight of the composition.

Most preferably the composition includes water making up to 3 to 20%, preferably 6 to 15% of the weight of the composition, the water being added to each component in sufficient quantity to make a paste.

It is known to prepackage the interactive components of a self setting composition in a cartridge having a frangible skin and two compartments each containing an interactive component, the components being held apart until the cartridge is ruptured by an element to be anchored by the self setting composition. The invention includes a cartridge containing in one of the compartments the acidic component and in the other the basic component.

The invention further includes a method of anchoring an anchor element using the self hardening composition herein disclosed in bulk form or prepackaged in a cartridge.

In order that the invention may be well understood it will now be described by way of illustration only with reference to the following examples in which all parts are by weight unless otherwise specified. (The compressive and shear strengths were measured in psi and have been converted to Newtons/$mm^2$ on the basis that 1 N/$mm^2$ = 142psi).

Example I

Two components A and B were made up as set out in Table 1. The magnesium oxide used in component A was refractory grade, 98% pure, -200 mesh, density about 27 kg/cu.m, with a loss on ignition of less than 0.50%. The sand used in component B was grade number 7 from the Central Silica Company having a grain size distribution of 99.6% between 600 and 150 microns, a mean particle size of 300 microns, and 50% passing through a 50 mesh sieve. The compressive strength and the shear strength were measured after two hours following mixture and the results are also shown in the Table.

Table I

| Component A | 1 | 2 | 3 | 4 |
|---|---|---|---|---|
| magnesium oxide | 30 | 30 | 30 | 30 |
| dolomite | 15 | 15 | 15 | 15 |
| sodium lignosulphonate | 0 | 2 | 2 | 2 |
| water | 8 | 6.5 | 6.5 | 6.5 |
| **Component B** | | | | |
| mono ammonium phosphate | 17.5 | 17.5 | 17.5 | 17.5 |
| trisodium phosphate | 5 | 5 | 5 | 5 |
| phosphoric acid (85% conc.) | 0 | 0 | 4 | 0 |
| ethyl acid phosphate | 0 | 0 | 0 | 4 |
| sand | 25 | 25 | 25 | 25 |
| water | 3 | 3 | 1 | 1 |
| Compressive strength $N/mm^2$ | 6.26 | 8.94 | 6.90 | 14.78 |
| shear strength $N/mm^2$ | 21.12 | 22.04 | 25.84 | 35.21 |

These results show that the presence of the lignosulphonate reduces the water requirement and aids an increase in compressive and shear strengths. When phosphoric acid is present, the compressive strength falls, although the shear strength increases. When ethyl acid phosphate is present in addition to the monoammonium phosphate and the trisodium phosphate both strengths rise appreciably.

Example II

Two components A and B were made up as follows:

Component A

| | |
|---|---|
| magnesium oxide | 30 |
| sodium lignosulphonate | 2 |
| water | 7 |

Component B

| | |
|---|---|
| monoammonium phosphate | 17.5 |
| tri-sodium phosphate | 5 |
| ethyl acid phosphate | 4 |
| water | 1.5 |

The components were mixed and poured into a cylindrical mould about 2.54 cm x 2.50 cm and allowed to set hard in ten minutes. The compressive strength after two hours was 3.59 $N/mm^2$. The shear strength was measured on a Baldwin Testing Machine by placing a nut about 2.2 cm x 2.2 cm filled with the set mixture over a hollow steel cylinder and measuring the force necessary to dislodge the grout plug within the nut using a steel plunger about 1.4 cm diameter. A shear strength of 13.17 $N/mm^2$ was obtained.

EXAMPLE III

Example II was repeated but adding 15 parts of dolomite to both Component A and B. The dolomite was graded kiln dried dolomitic limestone (Ohio Lime 20 x 80 mesh). A two hour compressive strength of 10.32 $N/mm^2$ and a shear strength of 22.75 $N/mm^2$ were measured and showed the benefit of adding dolomite.

Example IV

As dolomite in component B interacts with phosphate, it is preferable to substitute a graded sand filler in component B. The mixture of Example III was made up again but with 25 parts of a sand in component B instead of the 15 parts of dolomite. The sand had well rounded grains, with uniform gradation and was 100 mesh sand, graded 83 percent between 300 microns and 75 microns with a mean particle size of 150 microns, 85.5 percent passing a 50 mesh sieve and was from the Central Silica Company. The compressive and shear strengths were measured at different intervals over a three day period with the following results ($N/mm^2$):

| time | compressive strength | shear strength |
|---|---|---|
| 2 hours | 12.53 | 33.31 |
| 24 hours | 18.80 | 42.75 |
| 3 days | 23.30 | 49.86 |

A hole, 2.54 cm diameter was drilled into high strength concrete to a depth of about 13 cm and was filled with freshly mixed magnesium phosphate grout corresponding to Example II, and a deformed number six steel bar was thrust full depth into the grout filled hole. The grout hardened within five minutes. After two hours, the bar was tensioned using a hydraulic jack. The test was discontinued at a reading of 18 ton on the dial gauge, since elongation of the bar was observed.

Example V

Different alkyl acid phosphates were substituted in component B of test 4 of Example I and the strengths of the mixtures formed was measured after two hours cure time. The phosphates used and the results obtained are as follows:

| | COMPRESSIVE STRENGTH ($N/mm^2$) | SHEAR STRENGTH ($N/mm^2$) |
|---|---|---|
| (1) mono ethyl acid phosphate | 8.52 | 18.09 |
| (2) mono iso octyl acid phosphate | 10.77 | 17.39 |
| (3) methyl acid phosphate | 11.19 | 32.39 |
| (4) N-butyl acid phosphate | 10.77 | 19.22 |
| (5) stearyl acid phosphate | 7.18 | 18.30 |
| (6) ethyl acid phosphate | 12.53 | 33.30 |

Set Time in every case 6 to 7 minutes

(1) and (2) Stauffer Chemicals Co.

(3), (4) and (5) Manufactured by Hooker Chemicals Co.

Both (1) and (2) are predominantly mono ester.
(3), (4), (5) and (6) contain approximately equi molar amounts of mono and di esters, together with small amounts of condensed phosphates.

These results show that the lower alkyl groups of the mixed mono and di-acid esters are preferred.

Example VI

A magnesium oxide component A was made up

| | |
|---|---|
| magnesium oxide | 30 |
| dolomite | 15 |
| sodium lignosulphonate | 2 |
| water | 6.5 |

and reacted with the different phosphate components in Table II. In each case the compressive strength and the shear strength of the formed mixture was measured two hours later. The results are also shown in the Table from which one can conclude that even with a low water requirement good anchorage strengths were obtained with a composition of the invention and that polyphosphates when used in combination with trisodium phosphate exhibit a synergistic effect.

Table II

| COMPONENT B | (a) | (b) | (c) | (d) | (e) | (f) | (g) | (h) | (i) | (j) | (k) |
|---|---|---|---|---|---|---|---|---|---|---|---|
| mono ammonium phosphate | 17.5 | 17.5 | 17.5 | 17.5 | 17.5 | 17.5 | 17.5 | 17.5 | 17.5 | 17.5 | 17.5 |
| trisodium phosphate | 7 | - | - | - | 5 | 5 | 5 | - | - | - | - |
| sodium tripolyphosphate | - | 7 | - | - | 2 | - | - | 2 | 5 | 5 | - |
| tetrasodium pyrophosphate | - | - | 7 | - | - | 2 | - | 5 | 2 | - | 5 |
| ethyl acid phosphate | - | - | - | 7 | - | - | 2 | - | - | 2 | 2 |
| sand (Central Silica No.7) | 25 | 25 | 25 | 25 | 25 | 25 | 25 | 25 | 25 | 25 | 25 |
| water | 3 | 3 | 3 | 3 | 3 | 3 | 3 | 3 | 3 | 3 | 3 |
| compressive strength ($N/mm^2$) | 10.77 | 15.14 | 13.38 | 7.18 | 21.05 | 13.03 | 17.04 | 9.86 | 14.37 | 13.03 | 9.86 |
| shear strength ($N/mm^2$) | 9.86 | 37.53 | 27.67 | 16.90 | 42.25 | 40.14 | 37.53 | 10.77 | 14.08 | 25.07 | 23.94 |

0088170

Example VII

An adhesive grouting composition was prepared as in Example II using sodium dihydrogen phosphate instead of monoammonium phosphate in the same proportions, and after a cure period of two hours the compressive strength was found to be 9.86 $N/mm^2$ and the shear strength was 13.17 $N/mm^2$. These results show that sodium dihydrogen phosphate cannot be substituted for the monoammonium phosphate.

Example VIII

Test 4 of Example I was repeated using as fillers raw kiln dried dolomite (Ohio Lime 20 x 80 mesh) and ground aluminium trihydrate (Aluchem Inc.) and the following results were obtained ($N/mm^2$).

| | compressive strength | | | shear strength | | |
|---|---|---|---|---|---|---|
| | 2 hour | 24 hour | 3 days | 2 hour | 24 hours | 3 days |
| dolomite | 12.53 | 18.80 | 23.30 | 33.31 | 42.75 | 49.86 |
| aluminium trihydrate | 11.19 | 14.36 | 21.97 | 24.15 | 30.07 | 42.75 |

CLAIMS

1. An acidic component to react with a basic oxide component to form a self hardenable composition characterised by the combination of

(a) a dihydrogen phosphate

(b) a trivalent salt of phosphoric acid

(c) a polyphosphate and/or an alkyl acid phosphate.

2. An acidic component according to Claim 1 characterised in that ingredient (a) makes up 5 to 30% and ingredients (b) and (c) together make 2 to 10%, calculated with reference to the weight of the composition of acidic and basic components.

3. An acidic component according to Claim 1 or 2 characterised in that the polyphosphate is of the formula

$$M_{n+2}P_nO_{3n+1}$$

where M is a cation and *n* is an integer of 2 or 3.

4. An acidic component according to Claim 1 or 2 characterised in that the alkyl acid phosphate is of the formula

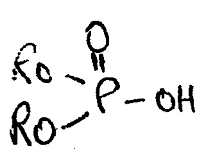

or

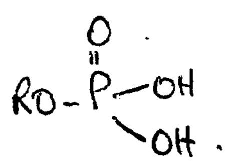

where R is a lower alkyl group, or a fatty acid residue.

5. An acidic component according to any preceding Claim characterised in that ingredient (b) is trisodium phosphate.

6. An acidic component according to any preceding Claim characterised in that ingredients (a) and (b) are mixed together, and then ingredient (c) is added.

7. An acidic component according to any preceding Claim characterised in that the components are mixed with water to form a paste having a pH of about 4.5.

8. A self hardenable composition comprising

(i) an acidic component according to any preceding Claim and comprising

- (a) a dihydrogen phosphate making up 5 to 30% of the weight of the composition.
- (b) a trivalent salt of phosphoric acid
- (c) a polyphosphate and/or an alkyl acid phosphate, ingredients (b) and (c) making up 2 to 15% of the weight of the composition; and

(ii) a basic component comprising

- (d) a basic oxide making up 10 to 30% of the weight of the composition,
- (e) a water reducing agent making up 1 to 3% of the

weight of the composition, and optionally (iii) fillers in one or both components making up the balance of the composition.

9. A composition according to Claim 8 characterised in that water is present and makes up 3 to 20% of the composition, the water being added to either component in sufficient quantity to form a paste.

10. A composition according to Claim 8 or 9 characterised in that the basic oxide is magnesia, dolomite or aluminium trihydrate.

11. A composition according to any of Claims 8, 9 or 10 characterised in that the fillers comprise raw dolomite, alumina trihydrate, sand, tricalcium phosphate or calcium hydrogen phosphate.

12. An anchoring cartridge for use in anchoring an anchor element comprising a frangible skin having two compartments each containing an interactive component of a self setting composition characterised in that the interactive components are the acidic and basic components according to any of Claims 8, 9, 10 or 11.

13. A method of anchoring an anchor element comprising locating an anchoring cartridge in a borehole therefor,

driving the element therein to rupture the cartridge and release the interactive components to form the self setting composition characterised in that the cartridge is according to Claim 12.

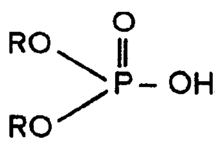

or

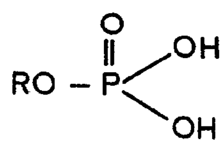

$$3MgO + 2NH_4H_2PO_4 \xrightarrow{H_2O} Mg_3(PO_4)_2 + 2NH_3\uparrow + 3H_2O$$

$$MgO + NaH_2PO_4 \xrightarrow{H_2O} NaMgPO_4 + 2H_2O$$

European Patent Office

# EUROPEAN SEARCH REPORT

0088170

Application number

EP 82 30 1096.2

## DOCUMENTS CONSIDERED TO BE RELEVANT

| Category | Citation of document with indication, where appropriate, of relevant passages | Relevant to claim |
|---|---|---|
| A | DE - A1 - 2 835 287 (E.I. DU PONT DE NEMOURS & CO.) * claims 1 to 7, 11, 21 to 25, 27, 33 to 35 * | 8-13 |
| D,A | & GB - A - 2 003 851 -- | |
| A | US - A - 4 152 167 (H.J. HORVITZ et al.) * claims 1, 4, 6 to 8, 10 to 15 * -- | 1,3, 8-11 |
| A | US - A - 3 966 482 (J.E. CASSIDY et al.) * claims 1, 2, 11, 16; column 1, lines 27 to 31; column 2, lines 13 to 21; column 3, lines 40 to 54 * -- | 1,4,9 |
| A | US - A - 3 960 580 (R.F. STIERLI et al.) * claims 1 to 3, 5 to 8, 11 to 16; column 3, lines 40 to 44 * -- | 1,2, 8-11 |
| A | US - A - 3 357 843 (J. BOWMAN) * claims 1, 3, 6, 7; column 2, lines 35 to 39 * -- | 1,3,10 |
| E | US - A - 4 324 592 (N.K. PATEL et al.) ---- | |

CLASSIFICATION OF THE APPLICATION (Int. Cl. 3)

C 04 B 29/02
C 04 B 13/00
E 21 D 20/02

TECHNICAL FIELDS SEARCHED (Int.Cl. 3)

C 04 B 9/04
C 04 B 13/00
C 04 B 17/00
C 04 B 29/00
C 04 B 35/00
E 21 D 20/00

CATEGORY OF CITED DOCUMENTS

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

X The present search report has been drawn up for all claims

| Place of search | Date of completion of the search | Examiner |
|---|---|---|
| Berlin | 22-10-1982 | STROUD |

EPO Form 1503.1 06.78